# EUROPÄISCHE PATENTSCHRIFT

(11) **EP 3 067 298 B1**
(45) Veröffentlichungstag und Bekanntmachung des Hinweises auf die Patenterteilung: **28.04.2021**
(21) Anmeldenummer: 16000551.8
(22) Anmeldetag: 08.03.2016
(51) Int. Cl.: B65G 21/10, B65G 41/00, B65G 67/02, B65G 67/08

(54) **VORRICHTUNG ZUM BE- ODER ENTLADEN EINES TRANSPORTBEHÄLTERS**
DEVICE FOR LOADING OR UNLOADING A TRANSPORT CONTAINER
DISPOSITIF DE CHARGEMENT OU DE DECHARGEMENT D'UN RECIPIENT DE TRANSPORT

(30) Priorität: 10.03.2015 DE 102015003239
(43) Veröffentlichungstag der Anmeldung: 14.09.2016
(73) Patentinhaber: BEUMER Group GmbH & Co. KG, 59269 Beckum (DE)
(72) Erfinder: Heitplatz, Heino, 48317 Drensteinfurt (DE)
(74) Vertreter: Philipp, Matthias

(56) Entgegenhaltungen:
- WO-A1-2014/174005
- DE-A1- 2 230 113
- DE-A1- 10 255 843
- DE-A1-102012 003 439
- FR-A1- 2 085 385
- US-A- 5 718 325
- US-A1- 2005 258 015

## Beschreibung

Die Erfindung betrifft eine Vorrichtung zum Be- oder Entladen eines mit einer Ladeöffnung versehenen Transportbehälters, mit einem Teleskopförderer, der eine Basisfördereinheit und mindestens eine relativ dazu in einer Längsrichtung ausfahrbaren Teleskopfördereinheit aufweist, mit einer Be- oder Entladevorrichtung, die auf einer Fahrebene verfahrbar ist und mittels einer Ausgleichseinrichtung mit dem Teleskopförderer gekoppelt ist, wobei die Ausgleichseinrichtung eine Relativbewegung zwischen der Be- oder Entladevorrichtung und dem Teleskopförderer bezüglich mindestens eines Freiheitsgrads zulässt.

Eine Be- oder Entladevorrichtung nach dem Oberbegriff des Anspruchs 1 ist aus der DE 10 2012 003 439 A1 bekannt, wobei es bei der dort beschriebenen Vorrichtung in ungünstigen Situationen mit verengtem Förderkanal aufgrund seitlich ausgelenkter Be- oder Entladeeinheit dazu kommen kann, dass große Stückgutteile am Übergang zwischen der Be- und Entladeeinheit und dem Teleskopförderer hängenbleiben oder sich verklemmen.

Die Aufgabe der Erfindung besteht darin, eine sichere Übergabe jeglicher Stückgutteile von der Be- oder Entladevorrichtung auf den Teleskopförderer bzw. umgekehrt zu gewährleisten.

Zur Lösung dieser Aufgabe schlägt die Erfindung bei einer gattungsgemäßen Vorrichtung vor, dass zwischen der Be- oder Entladevorrichtung, die auch als Ladevorrichtung bezeichnet werden kann, und einem Kopfende des Teleskopförderers ein Ausgleichsförderer angeordnet ist, der an einem hinteren Ende über ein erstes Gelenk mit dem Teleskopförderer und an einem vorderen Ende über ein zweites Gelenk mit der Be- oder Entladevorrichtung verbunden ist, wobei eines der Gelenke eine Drehbarkeit um zwei zueinander und zu der Längsrichtung senkrechte Drehachsen zulässt und eines der Gelenke eine Drehbarkeit um eine zu der Längsrichtung parallele Drehachse und um zwei zueinander und zu der Längsrichtung senkrechte Drehachsen zulässt, und wobei eines der Gelenke zusätzlich eine begrenzte Ausgleichsbewegung in der Längsrichtung zulässt.

Ein wesentlicher Vorteil besteht darin, dass der Förderkanal (effektive Durchlassbreite der Vorrichtung) bei gleichem Bauraum breiter gestaltet werden kann, und dass eine erweiterte Ausgleichsmöglichkeit zwischen Teleskopförderer und der Be- oder Entladevorrichtung in horizontaler und vertikaler Richtung erhalten wird.

Dadurch ist die Gefahr reduziert, dass Stückgüter im Übergangsbereich zwischen Be- oder Entladevorrichtung und Teleskopförderer hängen bleiben.

Der Ausgleichsförderer ist an beiden Enden drehbar an die Be- oder Entladevorrichtung und den Teleskopförderer angebunden und an einem Ende zusätzlich längsverschiebbar gehalten, so dass eine Ausgleichsmöglichkeit bei jeglicher Relativbewegung zwischen der Be- oder Entladevorrichtung und dem Kopfende des Teleskopförderers möglich ist. Der Ausgleichsförderer kann als Band- oder Gurtförderer oder als Rollenbahn mit angetriebenen und/oder nicht angetriebenen Rollen ausgebildet sein.

Die Ausgleichseinrichtung kann zwei Koppelstangen aufweisen, mit denen der Teleskopförderer mit der Be- oder Entladevorrichtung verbunden ist. Die Koppelstangen sind bevorzugt parallel und gleich lang, so dass mindestens zwei Freiheitsgrade einer relativen Bewegung erhalten werden, im Wesentlichen entlang einer zur Fahrebene senkrechten Ebene, und gegebenenfalls zusätzliche Drehungsfreiheitsgrade um eine zur Längsachse senkrechte Schwenkachse und/oder um eine zur Längsrichtung parallele Drehachse.

Die Koppelstangen sind bevorzugt endseitig jeweils mit Kugelgelenken angebunden.

Erfindungsgemäß ist vorgesehen, dass die Ausgleichseinrichtung eine Schwenkbarkeit der Be- oder Entladevorrichtung relativ zu dem Teleskopförderer um mindestens eine Drehachse zulässt. Eine Drehachse ist durch eine senkrecht zur Längsachse und parallel zur Fahrebene verlaufende Schwenkachse gebildet. Eine weitere Drehachse kann parallel zu der Längsachse oder senkrecht zu der Schwenkachse verlaufen. Ein Drehungsfreiheitsgrad um eine senkrecht zur Fahrebene verlaufende Achse ist ausgeschlossen.

Weiterhin lässt die Ausgleichseinrichtung bevorzugt eine lineare Bewegbarkeit der Be- oder Entladevorrichtung relativ zu dem Teleskopförderer in mindestens einer Richtung zu. Die Ausgleichseinrichtung lässt eine Bewegbarkeit der Be- oder Entladevorrichtung relativ zu dem Teleskopförderer in einer die Schwenkachse enthaltenden Ebene zu. Zur Verwirklichung der Bewegbarkeit in der ersten Richtung kann vorgesehen sein, dass die Ausgleichseinrichtung eine um die Schwenkachse schwenkbar gehaltene erste Linearführung in einer zu der Schwenkachse parallelen ersten Richtung aufweist. Zur Verwirklichung der Bewegbarkeit in der genannten Ebene kann vorgesehen sein, dass die Ausgleichseinrichtung eine von der ersten Linearführung getragene zweite Linearführung in einer zweiten Richtung aufweist, die senkrecht zu der ersten Richtung und in der genannten Ebene verläuft.

Es kann vorgesehen sein, dass die Be- oder Entladevorrichtung mittels eines Schnellbefestigungsmechanismus oder einer Schnellkoppeleinrichtung lösbar mit dem Teleskopförderer koppelbar ist. Der Schnellbefestigungsmechanismus bzw. die Schnellkoppeleinrichtung ermöglicht bevorzugt eine werkzeuglose, schnell durchführbare An- oder Abkopplung der beiden Komponenten, beispielsweise manuell, pneumatisch oder hydraulisch. Beispielsweise kann ein Rastmechanismus vorgesehen sein, mit dem korrespondierende Rastelemente in Eingriff bringbar und verriegelbar sind.

Die Ausgleichseinrichtung kann eine erste Anschlussplatte aufweisen, an der eine, und zwar die erste oder zweite Linearführung, und die an dieser Linearführung getragene andere, und zwar die zweite oder erste Linearführung gehalten sind, wobei die andere Linearführung entweder an der einen Komponente, dem Teleskopförderer oder der Be- oder Entladevorrichtung, fixiert ist und die erste Anschlussplatte dauerhaft oder mittels des Schnellbefestigungsmechanismus oder einer Schnellkoppeleinrichtung lösbar mit der anderen Komponente, der Be- oder Entladevorrichtung oder dem Teleskopförderer, koppelbar ist.

Es kann vorgesehen sein, dass der Schnellbefestigungsmechanismus zwischen der ersten Anschlussplatte und einer zweiten Anschlussplatte angeordnet ist, wobei die zweite Anschlussplatte dauerhaft an der anderen Komponente befestigt ist.

Die erste Linearführung kann über eine um die Schwenkachse und die dazu senkrechte Drehachse drehbare Gelenkverbindung mit der zweiten Linearführung gekoppelt sein.

Es kann vorgesehen sein, dass entweder an der Be- oder oder an dem Teleskopförderer zwei parallele beabstandete Linearführungselemente angeordnet sind, an denen je ein erstes Führungsteil geführt ist, wobei an jedem ersten Führungsteil über je ein um die Drehachse drehbares Drehgelenk, das insbesondere als Rundtischlager ausgebildet sein kann, ein zweites Führungsteil gehalten ist und an den zweiten Führungsteilen ein weiteres Linearführungselement um die Schwenkachse schwenkbar gehalten und geführt ist und welches mittels der ersten Anschlussplatte und des Schnellbefestigungsmechanismus mit der jeweils anderen Komponente, der Be- oder Entladevorrichtung oder dem Teleskopförderer, koppelbar sein kann. Insbesondere kann vorgesehen sein, dass die Linearführungselemente Führungsstangen sind.

Die Be- oder Entladevorrichtung kann als Laderoboter mit einem mehrere Freiheitsgrade aufweisenden Greifarm ausgebildet sein, beispielsweise mit drei, vier, fünf oder sechs Achsen. Zweckmäßigerweise ist zwischen dem Laderoboter und dem Ausgleichsförderer ein Übergangsförderer angeordnet.

Die Be- oder Entladevorrichtung kann auf einer Plattform angeordnet sein, die auf der Fahrebene gesteuert verfahrbar sein kann.

Alternativ kann die Be- oder Entladevorrichtung als Ladeförderer mit einem Aufnahmeförderer und einem an diesen anschließenden Übergabeförderer ausgebildet sein, wobei der Übergabeförderer an den Ausgleichsförderer anschließt. Zweckmäßigerweise ist ein Abgabeende des Übergabeförderers oberhalb und überlappend bzgl. des Ausgleichsförderers angeordnet, damit es nicht zu einem Verklemmen von Stückgutteilen kommen kann.

Bevorzugt ist der Ausgleichsförderer an seinem hinteren Ende oberhalb und überlappend bezüglich des Kopfendes des Teleskopförderers angeordnet, so dass es auch hier nicht zu einem Verklemmen von Stückgutteilen kommen kann.

Die Erfindung wird nachfolgend anhand eines Ausführungsbeispiels erläutert, wobei auf eine Zeichnung Bezug genommen ist, in der
Fig. 1 eine perspektivische Ansicht einer erfindungsgemäßen Vorrichtung zum Be- oder Entladen eines Transportbehälters in einer ersten Lade- bzw. Entladestellung zeigt, wobei die Be- oder Entladevorrichtung als Kombination von zwei Förderern ausgebildet ist,
Fig. 2 die Vorrichtung nach Fig. 1 in einer zweiten Entladestellung der Be- oder Entladevorrichtung zeigt,
Fig. 3 eine Draufsicht auf die Vorrichtung nach Fig. 1 zeigt, in einer Normalposition,
Fig. 4 eine Draufsicht auf die Vorrichtung nach Fig. 1 zeigt, in einer ausgelenkten Position ("links"),
Fig.5 eine Draufsicht ähnlich Fig. 3 zeigt, in einer zweiten ausgelenkten Position ("rechts"),
Fig. 6 die Vorrichtung nach Fig. 1 bis 4 in einer Seitenansicht zeigt, in einer Position, in der sich die Fahrebene der Be- und Entladevorrichtung auf einer gleichen Höhe mit einer Standebene des Teleskopförderers befindet,
Fig. 7 eine Ansicht ähnlich Fig. 6 zeigt, wobei eine die Fahrebene der Be- oder Entladevorrichtung gegenüber der Stellung nach Fig. 6 abgesenkt ist,
Fig. 8 eine Ansicht ähnlich Fig. 6 zeigt, wobei die Fahrebene in einer erhöhten Position dargestellt ist,
Fig. 9 eine schematische Seitenansicht der Vorrichtung im Bereich des Ausgleichsförderers und der Ausgleichseinrichtung zeigt,
Fig. 10 schematisch die Freiheitsgrade der Ausgleichseinrichtung zeigt,
Fig. 11 und 12 die Ausgleichseinrichtung weiter erläutern,
Fig. 13 die Freiheitsgrade der Gelenke des Ausgleichsförderers erläutert, und
Fig. 14 eine Ausführungsform mit Koppelstangen erläutert.

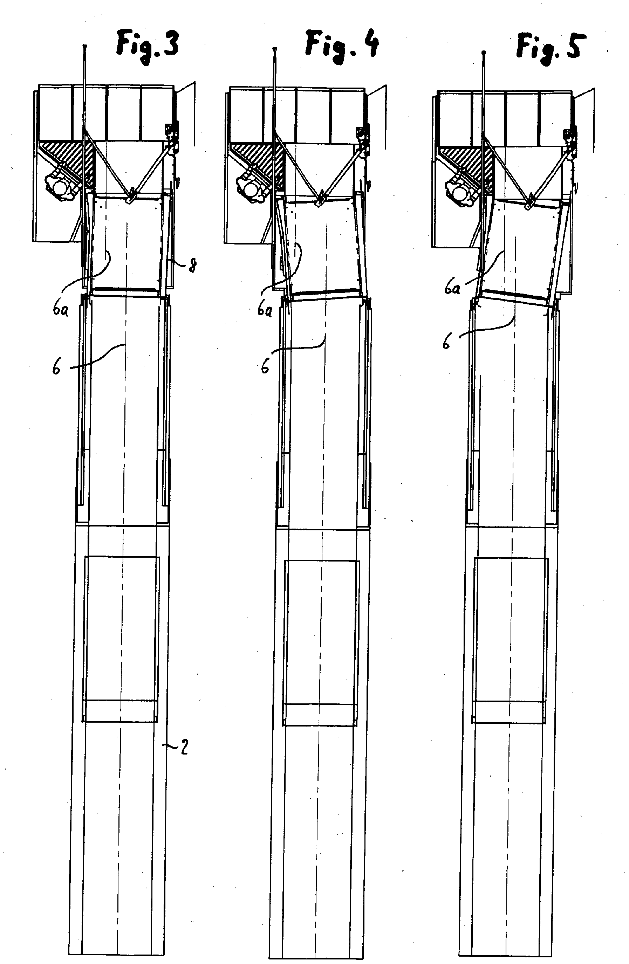

Die in den Zeichnungen dargestellte und nachfolgend erläuterte Vorrichtung dient im Wesentlichen dem Entladen eines nicht näher dargestellten Transportbehälters, der mit einer seitlichen Ladeöffnung versehen ist, wie beispielsweise eines Wechselbehälters, Transportbehälters oder LKW-Laderaums, wobei die Vorrichtung als eine wesentliche Komponente einen Teleskopförderer 2 aufweist, der eine Basisfördereinheit 2.0 und eine Anzahl von relativ dazu teleskopartig ausfahrbaren Teleskopfördereinheiten 2.1, 2.2, 2.3, 2.4, 2.5 und 2.6 (insbes. Fig. 5) umfasst. Eine Ausfahrrichtung der Teleskopförderelemente ist parallel zu einer Förderrichtung oder Längsrichtung 3, in der der Teleskopförderer antreibbar ist. In der dargestellten Ausführung weist jede einzelne Teleskopfördereinheit 2.1 ... 2.6 ein eigenes, endlos umlaufendes Förderband auf. Eine letzte oder oberste Teleskopfördereinheit 2.6 bildet mit ihrem vorderen Ende ein Kopfende 2a des Teleskopförderers. Eine Längsmittellinie des Teleskopförderers ist mit 2c bezeichnet (Fig. 3 bis 5).

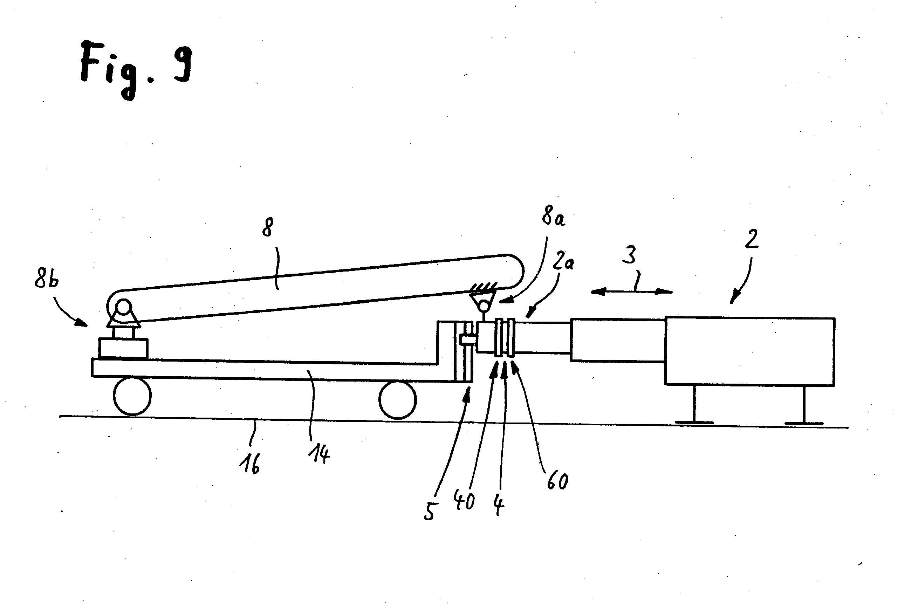

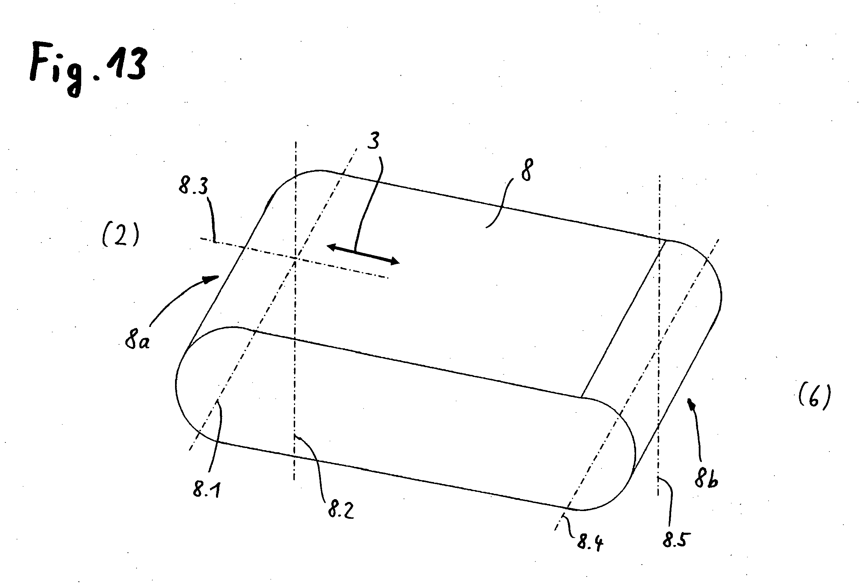

An einem vorderen Ende des Teleskopförderers 2, wobei auch auf Fig. 9 und 13 verwiesen sei, ist als weitere wesentliche Komponente der Vorrichtung mittels einer Ausgleichseinrichtung 5 eine Be- oder Entladevorrichtung 6 angekoppelt, wobei ein Ausgleichsförderer 8 als weitere wesentliche Komponente der Vorrichtung einen Übergangsbereich zwischen dem Kopfende 2a des Teleskopförderers 2 und der Be- oder Entladevorrichtung 6 überbrückt. Der Ausgleichsförderer 8 ist an seinem hinteren, dem Teleskopförderer 2 zugekehrten Ende über ein erstes in allen Richtungen drehbares Gelenk 8a mit dem Teleskopförderer 2 verbunden, das mit anderen Worten eine Schwenkbewegung um zwei zueinander und zu der Längsrichtung 3 senkrechte Drehachsen 8.1, 8.2, eine Drehbewegung um eine zur Längsrichtung 3 parallele Drehachse 8.3 und zusätzlich eine lineare Ausgleichsbewegung in Längsrichtung 3 zulässt. An seinem vorderen Ende ist der Ausgleichsförderer 8 über ein zweites Gelenk 8b mit der Plattform 14 bzw. mit der Be- oder Entladevorrichtung 6 verbunden, das eine Schwenkbewegung um zwei zueinander und zu der Längsrichtung senkrechte Drehachsen 8.4, 8.5 zulässt. Gelenk 8b kann somit nicht um eine zur Längsrichtung 3 parallele Achse verschwenkt werden.

Die Be- oder Entladevorrichtung 6 kann als beliebige Ladevorrichtung ausgebildet sein, beispielsweise als Laderoboter mit einem Greifer mit mehreren Freiheitsgraden, oder wie dargestellt in Form einer Fördervorrichtung, die in dem dargestellten Ausführungsbeispiel zwei miteinander zusammenwirkende Förderer umfasst. Ein Aufnahmeförderer 10 dient der unmittelbaren Aufnahme eines Stückgutteils vom Boden oder von einer gestapelten Position, während ein an den Aufnahmeförderer 10 anschließender Übergabeförderer 12 dem weiteren Transport der Stückgutteile zu dem Ausgleichsförderer 8 dient.

Die Be- oder Entladevorrichtung 6 in Form des Aufnahmeförderers 10 und Übergabeförderers 12 mit Längsmittellinie 6a sowie ein vorderes, an den Übergabeförderer 12 anschließendes Ende des Ausgleichsförderers 8 sind auf einer Plattform 14 angeordnet, die auf einem ebenen Untergrund oder einer Fahrebene 16 verfahrbar ist. Eine Bewegung der Plattform 14 in Längsrichtung 3, d.h. in und entgegen der Förderrichtung des Teleskopförderers, erfolgt durch eine entsprechend gesteuerte Bewegung des mit der Plattform 14 über die Ausgleichseinrichtung 5 gekoppelten Teleskopförderers 2, während eine Verfahrbewegung der Plattform quer zur Längsrichtung 3 durch eine entsprechende gesteuerte Lenkung von Rädern erfolgt, auf denen die Plattform auf dem Untergrund 16 verfahrbar ist.

Die Basisfördereinheit 2.0 ist an einem darunter befindlichen Maschinengestell 2b des Teleskopförderers 2 gehalten, welches auf einem Untergrund steht oder in Längsrichtung antreibbar und verfahrbar ist. Eine an ein hinteres Ende des Teleskopförderers 2 anschließende Fördertechnik, beispielsweise Sortiertechnik, ist nicht dargestellt.

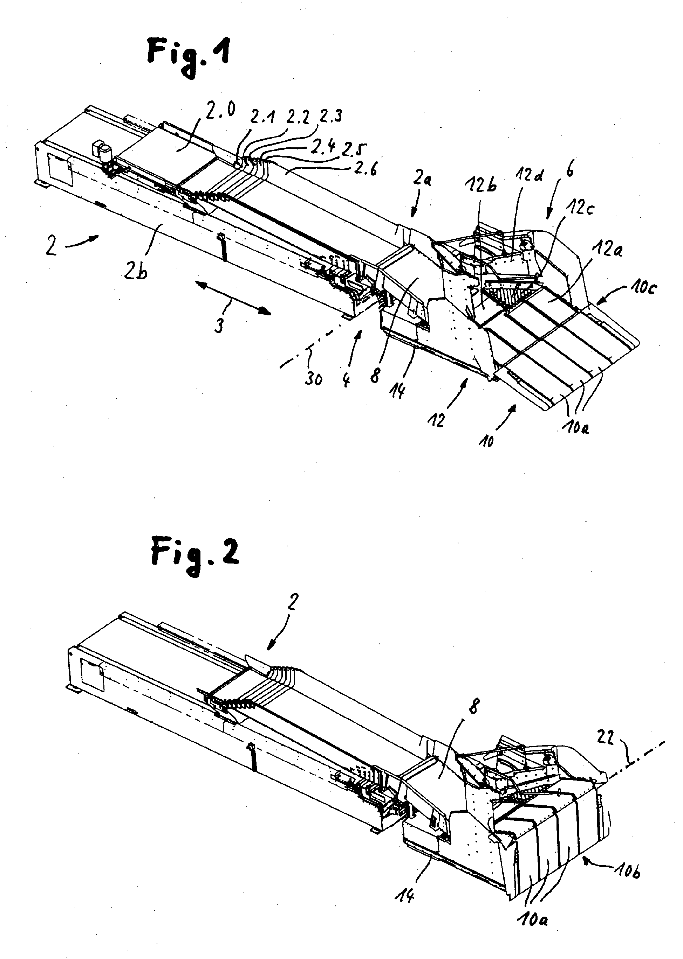

Der Aufnahmeförderer 10 besteht aus einer Reihe von beispielsweise vier nebeneinander angeordneten einzelnen Aufnahmeförderelementen 10a, beispielsweise Gurtförderern, wobei jedes Aufnahmeförderelement 10a aktiv oder passiv längenanpassbar ist, was in Fig. 1 für ein Aufnahmeförderelement 10a beispielhaft dargestellt ist. Bei passiver Längenanpassbarkeit verkürzt sich das Aufnahmeförderelement 10a bei einer entsprechenden, gegen ein vorderes Aufnahmeende 10b des Aufnahmeförderers 10 wirkenden Kraft gegen eine Rückstellkraft und verlängert sich bei Wegfall der Kraft selbsttätig wieder bis auf seine Ausgangslänge.

Der Übergabeförderer 12 ist in der dargestellten Ausführungsform mehrfach unterteilt und besteht aus vier nebeneinander angeordneten Übergabeförderelementen 12a in Form von Bandförderern, einem nachgeordneten weiteren Bandförderer 12b sowie einer seitlich angeordneten Rollenbahn 12c, die eine im Wesentlichen dreieck- oder trapezförmige Förderoberfläche bildet. Die Rollenbahn 12c hat schräg zur Längsrichtung 3 angeordnete Rollen, um eine zu einer vertikalen Längsmittelebene des Teleskopförderers 2 gerichtete Förderkomponente zu erzielen. An einem äußeren Rand der Rollenbahn 12c sowie an einem gegenüberliegenden Rand des Bandförderers 12b sind seitliche Leitbleche 12d angeordnet, um Stückgutteile in Richtung des Ausgleichsförderers 8 zu lenken.

Anhand der unterschiedlichen Stellungen von Aufnahme- und Übergabeförderer 10, 12 in Fig. 1 und 2 ist erkennbar, dass der Übergabeförderer 12 an einem Übergabeende 12e um eine erste Schwenkachse 20, die horizontal und quer zur Längsrichtung 3 angeordnet ist, verschwenkbar gehalten ist, so dass der Übergabeförderer 12 in seinem vorderen Bereich, insbesondere an einem Übernahmeende 12f, höhenverstellbar ist.

Der Aufnahmeförderer 10 ist um eine zweite Schwenkachse 22, die benachbart zu und insbesondere an dem Übernahmeende 12f des Übergabeförderers 12 horizontal und quer zur Förderrichtung 3 angeordnet ist, höhenverschwenkbar an dem Übergabeförderer 12 gehalten, so dass ein vorderstes Aufnahmeende 10b des Aufnahmeförderers 10 unabhängig von einer Höhenverstellung des Übernahmeendes 12f des Übernahmeförderers 12 verschwenkbar und höhenverstellbar ist.

Die zweite Schwenkachse 22 verläuft bei Ausbildung des Aufnahmeförderers 10 als Band- oder Rollenförderer bevorzugt durch eine an einem Abgabeende 10c des Aufnahmeförderers 10 angeordnete Antriebs- oder Umlenkrolle des Aufnahmeförderers 10, oder durch eine am Übernahmeende 12f des Übergabeförderers 12 angeordnete Antriebs- oder Umlenkrolle.

Fig. 1 zeigt eine untere Entladestellung der Vorrichtung, bei der sich das Aufnahmeende 10b des Aufnahmeförderers auf dem oder unmittelbar oberhalb des Untergrunds 16 befindet und Aufnahmeförderer und Übergabeförderer 10, 12 eine im Wesentlichen gleiche Neigung in Bezug auf die Horizontale oder den Untergrund 16 aufweisen, so dass auf dem Boden liegende oder aufgehäufte Stückgutteile durch Antrieb von Aufnahmeförderer 10 und Übergabeförderer 12 in Förderrichtung 3 aufnehmbar und in Richtung des Teleskopförderers 2 förderbar sind.

Fig. 2 zeigt eine andere Entladestellung, in der der Aufnahmeförderer 10 um die zweite Schwenkachse 22 im Wesentlichen vertikal geschwenkt ist und höher gestapelte Stückgutteile von dem Übergabeförderer 12 aufnehmbar sind.

Fig. 3 bis 8 dienen der Erläuterung der Ausgleichseinrichtung 5, mittels der die Plattform 14 zusammen mit der darauf befindlichen Be- oder Entladevorrichtung 6 mit dem Teleskopförderer 2 lösbar gekoppelt ist. Die Ausgleichseinrichtung 5 ermöglicht über Ausgleichselemente zunächst eine Schwenkbewegung der Plattform 14 relativ zu dem Teleskopförderer 2 um eine parallel zur Fahrebene 16 und quer zur Längsrichtung 3 orientierte Schwenkachse 30 (Fig. 1, 4, 5, 6) und weiterhin eine Dreh- bzw. Schwenkbewegung um eine senkrecht zu der Schwenkachse 30 orientierte Drehachse 58.

Weiterhin ermöglicht die Ausgleichseinrichtung 5 eine begrenzte horizontale Verlagerbarkeit der Plattform 14 relativ zu dem Teleskopförderer 2, parallel zu der Fahrebene 16, wobei eine solche seitliche Bewegung und eine entsprechende Stellung des Ausgleichsförderers 8 in Fig. 4 und 5 im Unterschied zu einer Neutralstellung gemäß Fig. 3 dargestellt ist.

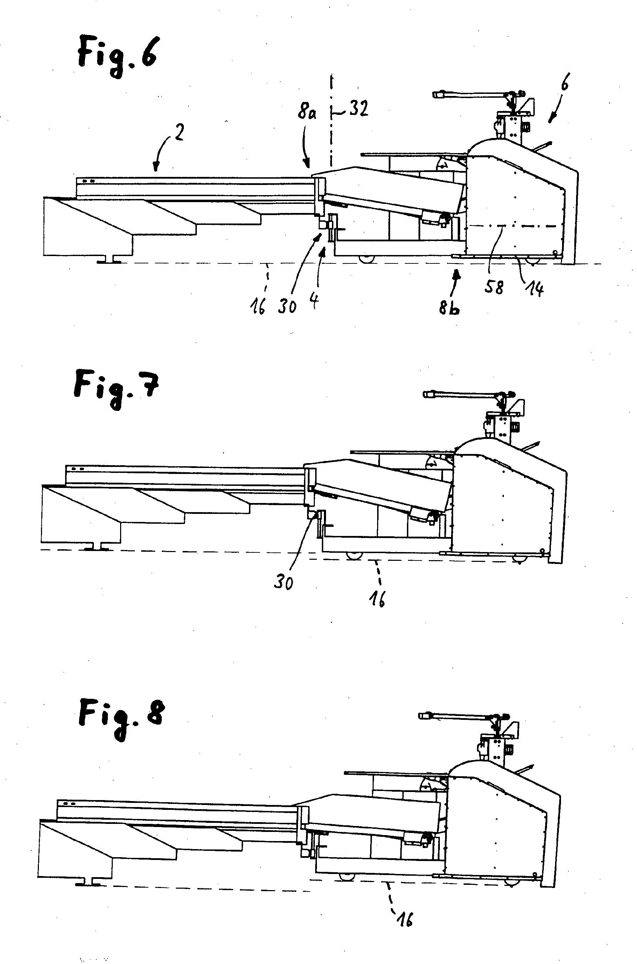

Schließlich ermöglicht die Ausgleichseinrichtung 5eine begrenzte Verlagerbarkeit der Plattform 14 relativ zu dem Teleskopförderer 2 in einer zu der Richtung der horizontalen Verlagerbarkeit senkrechten Richtung in einer Ebene 32, die senkrecht zu der Drehachse 58 ist und beispielsweise senkrecht zur Längsrichtung 3 und zur Fahrebene 16 orientiert sein kann. Fig. 6 und 7 zeigen beispielhaft Verlagerungen der Plattform 14 unterhalb und oberhalb einer Neutralstellung gemäß Fig. 5. Die Ebene 32 liegt in Fig. 5 senkrecht zur Darstellungsebene.

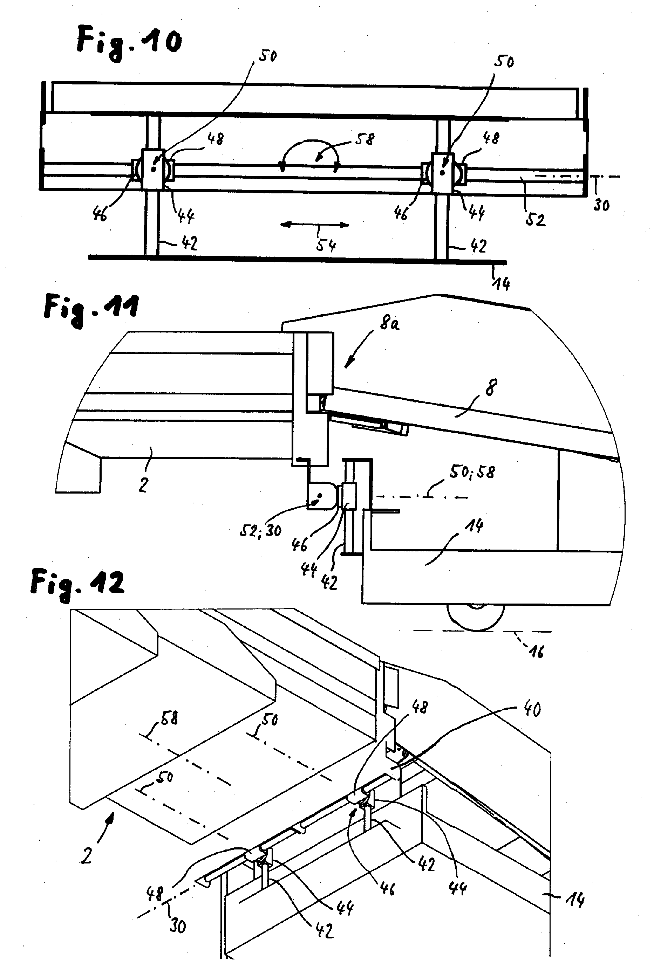

Fig. 10 bis 12 erläutern beispielhaft den Aufbau der Ausgleichseinrichtung 5 und der davon umfassten Ausgleichselemente, mit denen die Plattform 14 mit dem Teleskopförderer 2 gekoppelt werden kann, wobei die vorstehend beschriebenen Freiheitsgrade einer relativen Bewegung zwischen den beiden Komponenten erhalten werden, sowie schematisch den Schnellbefestigungsmechanismus 4.

An der Plattform 14 sind zwei parallele beabstandete Linearführungselemente in Form von Führungsstangen 42 angeordnet, die die Ebene 32 definieren. An jeder Führungsstange 42 ist ein erstes Führungsteil 44 längsverschieblich geführt, beispielsweise als Hülse durch formschlüssiges Umgreifen der Führungsstange 42 oder nach Art einer Kugelbüchse. An jedem ersten Führungsteil 44 ist über ein Drehgelenk 46, beispielsweise Rundtischlager, ein zweites Führungsteil 48 gehalten, welches aufgrund des Drehgelenks 46 um eine zu der Schwenkachse 30 senkrechte Drehachse 50 relativ zu dem ersten Führungsteil 44 drehbar ist. An den beiden zweiten Führungsteilen 48 ist ein weiteres Linearführungselement in Form einer Führungsstange 52 in Richtung der Schwenkachse 30 längsverschieblich gehalten und geführt, wobei die zweiten Führungsteile 48 in Richtung der Schwenkachse 30 auf der Führungsstange 52 verschieblich sind, beispielsweise als Hülse durch formschlüssiges Umschließen der Führungsstange 52 oder nach Art einer Kugelbüchse.

Die Führungsstange 52 ist schließlich über eine erste Anschlussplatte 40 mittels eines Schnellbefestigungsmechanismus 4, d.h. bevorzugt werkzeuglos, lösbar an dem Teleskopförderer 2 gehalten, so dass sich die in Fig. 10 und 11 gezeigten Freiheitsgrade zwischen Plattform 14 und Teleskopförderer 2 ergeben. Diese bestehen zunächst aus einer Schwenkbarkeit um die parallel zur Fahrebene 16 und senkrecht zur Längsrichtung 3 angeordnete Schwenkachse 30 und weiterhin aus den beiden linearen Verschiebemöglichkeiten in der Ebene 32, veranschaulicht durch einen horizontalen linearen Freiheitsgrad 54 als erste Richtung und einen dazu senkrechten, insbesondere vertikalen linearen Freiheitsgrad 56 als zweite Richtung (Fig.10). Hinzu kommt eine relative Verdrehbarkeit zwischen Plattform 14 und Teleskopförderer 2 um eine parallel zu den Drehachsen 50 angeordnete Drehachse 58, die senkrecht zu der Ebene 32 und den Führungsstangen 42 orientiert ist.

Fig. 9 zeigt schematisch, dass die Ausgleichseinrichtung 5 an der Plattform 14 bzw. an der Be- und Entladevorrichtung 6 gehalten ist, wobei die erste Anschlussplatte 40 benachbart dazu dargestellt ist. Zur lösbaren Ankopplung an den Teleskopförderer 2 dient der Schnellbefestigungsmechanismus 4, der die erste Anschlussplatte 40 mit einer fest mit dem Teleskopförderer 2 verbundenen zweiten Anschlussplatte 60 verbindet.

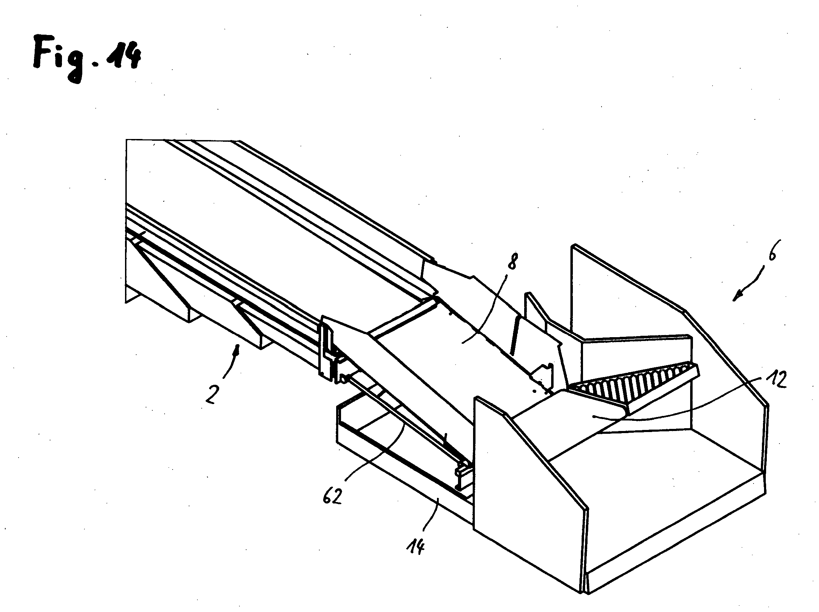

Fig. 14 zeigt eine Variante der Vorrichtung, bei der die Ausgleichseinrichtung durch zwei Koppelstangen 62 gebildet ist. Die beiden Koppelstangen 62 sind parallel zueinander angeordnet und gleich lang. Beide Koppelstangen sind an ihren beiderseitigen Enden jeweils mittels eines Kugelgelenks (Kugelkopf) einerseits mit dem Teleskopförderer und andererseits mit der Plattform bzw. der Be- oder Entladevorrichtung 6 verbunden.

### Bezugszeichenliste

- 2: Teleskopförderer
- 2a: Kopfende
- 2b: Maschinengestell
- 2c: Längsmittellinie
- 2.0: Basisfördereinheit
- 2.1 ... 2.6: Teleskopfördereinheit
- 3: Förderrichtung (Längsrichtung)
- 4: Schnellbefestigungsmechanismus (Schnellkoppeleinrichtung)
- 5: Ausgleichseinrichtung
- 6: Be- oder Entladevorrichtung
- 6a: Längsmittellinie
- 8: Ausgleichsförderer
- 8a: erstes Gelenk
- 8b: zweites Gelenk
- 8.1, 8.2, 8.3: Drehachsen (von 8a)
- 8.4, 8.5: Drehachsen (von 8b)
- 10: Aufnahmeförderer
- 10a: Aufnahmeförderelement
- 10b: Aufnahmeende
- 10c: Abgabeende
- 12: Übergabeförderer
- 12a: Übergabeförderelement
- 12b: Bandförderer
- 12c: Rollenbahn
- 12d: Leitblech
- 12e: Übergabeende
- 12f: Übernahmeende
- 14: Plattform
- 16: Untergrund (Fahrebene)
- 20: erste Schwenkachse
- 22: zweite Schwenkachse
- 30: Schwenkachse
- 32: Ebene
- 40: erste Anschlussplatte
- 42: Führungsstange (Linearführungselement)
- 44: erstes Führungsteil
- 46: Drehgelenk
- 48: zweites Führungsteil
- 50: Drehachse
- 51: Pfeil (Drehachse 50)
- 54: horizontaler Freiheitsgrad (erste Richtung)
- 56: vertikaler Freiheitsgrad (zweite Richtung)
- 58: Drehachse
- 60: zweite Anschlussplatte
- 62: Koppelstange

## Patentansprüche

1. Vorrichtung zum Be- oder Entladen eines mit einer Ladeöffnung versehenen Transportbehälters, mit einem Teleskopförderer (2), der eine Basisfördereinheit (2.0) und mindestens eine relativ dazu in einer Längsrichtung (3) ausfahrbare Teleskopfördereinheit (2.1 ... 2.6) aufweist, mit einer Be- oder Entladevorrichtung (6), die auf einer Fahrebene (16) verfahrbar ist und mittels einer Ausgleichseinrichtung (5) mit dem Teleskopförderer (2) gekoppelt ist, wobei die Ausgleichseinrichtung (5) eine Schwenkbarkeit der Be- oder Entladevorrichtung (6) relativ zu dem Teleskopförderer (2) um eine senkrecht zu der Längsrichtung (3) und parallel zu der Fahrebene (16) verlaufende Schwenkachse (30) zulässt, eine Bewegbarkeit der Be- oder Entladevorrichtung (6) relativ zu dem Teleskopförderer (2) in einer die Schwenkachse (30) enthaltenden Ebene (32) zulässt und einen Drehungsfreiheitsgrad zwischen der Be- und Entladevorrichtung (6) und dem Teleskopförderer (2) um eine senkrecht zu der Fahrebene (16) verlaufende Achse ausschließt, **dadurch gekennzeichnet, dass** zwischen der Be- oder Entladevorrichtung (6) und einem Kopfende (2a) des Teleskopförderers (2) ein Ausgleichsförderer (8) angeordnet ist, der an einem hinteren Ende über ein erstes Gelenk (8a) mit dem Teleskopförderer (2) und an einem vorderen Ende über ein zweites Gelenk (8b) mit der Be- oder Entladevorrichtung (6) verbunden ist, wobei eines der Gelenke (8a, 8b) eine Drehbarkeit um zwei zueinander und zu der Längsrichtung (3) senkrechte Drehachsen zulässt und eines der Gelenke (8a, 8b) eine Drehbarkeit um eine zu der Längsrichtung (3) parallele Drehachse und um zwei zueinander und zu der Längsrichtung (3) senkrechte Drehachsen zulässt, und wobei eines der Gelenke (8a, 8b) zusätzlich eine begrenzte Ausgleichsbewegung in der Längsrichtung (3) zulässt.

2. Vorrichtung nach Anspruch 1, **dadurch gekennzeichnet, dass** die Ausgleichseinrichtung (5) zwei Koppelstangen aufweist, mit denen der Teleskopförderer (2) mit der Be- oder Entladevorrichtung (6) verbunden ist.

3. Vorrichtung nach Anspruch 1, **dadurch gekennzeichnet, dass** die Ausgleichseinrichtung (5) eine um die Schwenkachse (30) schwenkbar gehaltene erste Linearführung (52, 48) in einer zu der Schwenkachse (30) parallelen ersten Richtung (54) aufweist.

4. Vorrichtung nach Anspruch 3, **dadurch gekennzeichnet, dass** die Ausgleichseinrichtung (5) eine von der ersten Linearführung (52, 48) getragene zweite Linearführung (42, 44) in einer zweiten Richtung (56) aufweist, die senkrecht zu der ersten Richtung (54) und in der Ebene (32) verläuft.

5. Vorrichtung nach einem der vorangehenden Ansprüche, **dadurch gekennzeichnet, dass** die Be- oder Entladevorrichtung (6) mittels einer Schnellkoppeleinrichtung (4) lösbar mit dem Teleskopförderer (2) koppelbar ist.

6. Vorrichtung nach Anspruch 3, 4 und 5, **dadurch gekennzeichnet, dass** die Ausgleichseinrichtung (5) eine erste Anschlussplatte (40) aufweist, an der eine, und zwar die erste oder zweite Linearführung, und die an dieser Linearführung getragene andere, und zwar die zweite oder erste Linearführung gehalten sind, wobei die andere Linearführung entweder an der einen Komponente, dem Teleskopförderer (2) oder der Be- oder Entladevorrichtung (6), fixiert ist und die erste Anschlussplatte (40) dauerhaft oder mittels der Schnellkoppeleinrichtung (4) lösbar an der anderen Komponente, der Be- oder Entladevorrichtung (6) oder dem Teleskopförderer (2), gehalten ist.

7. Vorrichtung nach Anspruch 6, **dadurch gekennzeichnet, dass** die Schnellkoppeleinrichtung (4) zwischen der ersten Anschlussplatte (40) und einer zweiten Anschlussplatte (60) angeordnet ist, wobei die zweite Anschlussplatte (60) dauerhaft an der anderen Komponente befestigt ist.

8. Vorrichtung nach einem der Ansprüche 4 bis 6, **dadurch gekennzeichnet, dass** die erste Linearführung (52, 48) über eine um die Schwenkachse (30) und die dazu senkrechte Drehachse (58) drehbare Gelenkverbindung mit der zweiten Linearführung (42, 44) gekoppelt ist.

9. Vorrichtung nach Anspruch 8, **dadurch gekennzeichnet, dass** entweder an der Be- oder Entladevorrichtung (6) oder an dem Teleskopförderer (2) zwei parallele beabstandete Linearführungselemente (42) angeordnet sind, an denen je ein erstes Führungsteil (44) geführt ist, wobei an jedem ersten Führungsteil (44) über je ein um die Drehachse (58) drehbares Drehgelenk (46) ein zweites Führungsteil (48) gehalten ist und an den zweiten Führungsteilen (48) ein weiteres Linearführungselement (52) um die Schwenkachse (30) schwenkbar gehalten und geführt ist.

10. Vorrichtung nach Anspruch 9, **dadurch gekennzeichnet, dass** das weitere Linearführungselement (52) mittels der Anschlussplatte (40) und der Schnellkoppeleinrichtung (4) mit der Be- oder Entladevorrichtung (6) oder mit dem Teleskopförderer (2) koppelbar ist.

## Claims

1. Device for loading or unloading of a transport container, equipped with a loading opening, with a telescopic conveyor (2) that has a base conveyor unit (2.0) and at least one telescopic conveyor unit (2.1 ... 2.6) that can be extended relative to that in a longitudinal direction (3), with a loading or unloading device (6) that can be moved on a driving surface (16) and is coupled to the telescopic conveyor (2) by means of a compensating device (5), wherein the compensating device (5) permits the loading or unloading device (6) to be pivoted relative to the telescopic conveyor (2) around a pivot axis (30) running perpendicular to the longitudinal direction (3) and parallel to the driving surface (16), permits the loading or unloading device (6) to move relative to the telescopic conveyor (2) in a plane (32) that includes the pivot axis (30), and excludes a rotational degree of freedom between the loading or unloading device (6) and the telescopic conveyor (2) around an axis running perpendicular to the driving surface (16),
**characterised in that** arranged between the loading or unloading device (6) and a head end (2a) of the telescopic conveyor (2) is a compensating conveyor (8), which at a rear end is connected via a first joint (8a) to the telescopic conveyor (2) and at a front end is connected via a second joint (8b) to the loading or unloading device (6), wherein one of the joints (8a, 8b) permits rotation around two rotational axes that are perpendicular to one another and to the longitudinal direction (3), and one of the joints (8a, 8b) permits rotation around a rotational axis parallel to the longitudinal direction (3) and around two rotational axes that are perpendicular to one another and to the longitudinal direction (3), and wherein one of the joints (8a, 8b) additionally permits a limited compensating movement in the longitudinal direction (3).

2. Device according to claim 1, **characterised in that** the compensating device (5) has two coupling rods with which the telescopic conveyor (2) is connected to the loading or unloading device (6).

3. Device according to claim 1, **characterised in that** the compensating device (5) has a first linear guide (52, 48) that is held such that it can be pivoted around the pivot axis (30) in a first direction (54) that is parallel to the pivot axis (30).

4. Device according to claim 3, **characterised in that** the compensating device (5) has a second linear guide (42, 44) that is borne by the first linear guide (52, 48) in a second direction (56) that runs perpendicular to the first direction (54) and in the plane (32).

5. Device according to one of the preceding claims, **characterised in that** the loading or unloading device (6) can be detachably connected to the telescopic conveyor (2) by means of a quick coupling device (4).

6. Device according to claim 3, 4 and 5, **characterised in that** the compensating device (5) has a first connection plate (40) on which are held a linear guide, namely the first or second linear guide, and the other, namely the second or first linear guide that is held thereon, wherein the other linear guide is fixed on either the one component, the telescopic conveyor (2), or the loading or unloading device (6), and the first connection plate (40) is held, permanently or detachably by means of the quick coupling device (4), on the other component, the loading or unloading device (6) or the telescopic conveyor (2).

7. Device according to claim 6, **characterised in that** the quick coupling device (4) is arranged between the first connection plate (40) and a second connection plate (60), wherein the second connection plate (60) is permanently attached to the other component.

8. Device according to one of the claims 4 to 6, **characterised in that** the first linear guide (52, 48) is coupled to the second linear guide (42, 44) via a joint connection that can be rotated around the pivot axis (30) and the rotational axis (58) that is perpendicular to it.

9. Device according to claim 8, **characterised in that** arranged either on the loading or unloading device (6) or on the telescopic conveyor (2) are two parallel linear guide elements (42) that are spaced apart, on which in each case a first guide part (44) is held, wherein a second guide part (48) is held on each first guide part (44), in each case via a swivel joint (46) that can be rotated around the rotational axis (58), and at the second guide parts (48) an additional linear guide element (52) is held and can be pivoted around the pivot axis (30).

10. Device according to claim 9, **characterised in that** the additional linear guide element (52) can be coupled to the loading or unloading device (6) or to the telescopic conveyor (2) by means of the connection plate (40) and the quick coupling device (4).

## Revendications

1. Dispositif de chargement et déchargement d'un conteneur de transport, équipé d'une ouverture de chargement, avec un convoyeur télescopique (2) qui a un socle à bande transporteuse (2.0) et au moins un groupe télescopique de convoyage (2.1 ... 2.6) qui peut se déployer par rapport à celui-ci dans un sens longitudinal (3), avec un dispositif de chargement ou déchargement (6) qui peut se déplacer sur une surface mobile (16) et est raccordé au convoyeur télescopique (2) par le biais d'un dispositif compensateur (5), et ce dispositif compensateur (5) permet au dispositif de chargement ou déchargement (6) de pivoter par rapport au convoyeur télescopique (2) autour d'un axe pivot (30) qui est implanté à la perpendiculaire du sens longitudinal (3) et qui est parallèle à la surface mobile (16), ce qui permet au dispositif de chargement ou déchargement (6) de se déplacer par rapport au convoyeur télescopique (2) dans un plan (32) qui contient l'axe pivot (30), mais exclut une certaine liberté en rotation entre le dispositif de chargement ou de déchargement (6) et le convoyeur télescopique (2) autour d'un axe implanté à la perpendiculaire de la surface mobile (16),
**se caractérisant par le fait qu'**entre le dispositif de chargement ou déchargement (6) et une extrémité de tête (2a) du convoyeur télescopique (2), il y a un convoyeur compensateur (8) qui, à une extrémité arrière, est raccordé par un premier joint (8a) au convoyeur télescopique (2) et qui, à une extrémité avant, est raccordé par un deuxième joint (8b) au dispositif de chargement ou déchargement (6), et l'un de ces joints (8a, 8b) permet une rotation autour de deux axes rotatifs qui sont perpendiculaires l'un par rapport à l'autre, dans le sens longitudinal (3), et l'un de ces joints (8a, 8b) permet une rotation autour d'un axe rotatif qui est parallèle au sens longitudinal (3) et autour de deux axes rotatifs qui sont perpendiculaires l'un par rapport dans le sens longitudinal (3), et l'un de ces joints (8a, 8b) permet, en outre, un mouvement compensateur limité dans le sens longitudinal (3).

2. Le dispositif que décrit la revendication 1, et qui se **caractérise par le fait que** le dispositif compensateur (5) comporte deux tringles de couplage qui assurent le rattachement du convoyeur télescopique (2) au dispositif de chargement ou déchargement (6).

3. Le dispositif que décrit la revendication 1, et qui se **caractérise par le fait que** le dispositif compensateur (5) comporte un premier guide linéaire (52, 48) qui est positionné de manière à pouvoir pivoter autour de l'axe pivot (30) dans un premier sens (54) qui est parallèle à cet axe pivot (30).

4. Le dispositif que décrit la revendication 3, et qui se **caractérise par le fait que** le dispositif compensateur (5) comporte un deuxième guide linéaire (42, 44) qui est soutenu par le premier guide linéaire (52, 48) dans un deuxième sens (56) qui est perpendiculaire au premier sens (54) et dans le plan (32).

5. Le dispositif que décrit l'une ou l'autre des revendications précédentes, et qui se **caractérise par le fait que** le dispositif de chargement ou déchargement (6) peut se raccorder au convoyeur télescopique (2) à l'aide d'un dispositif à raccord rapide (4) et peut s'en détacher.

6. Le dispositif que décrivent les revendications 3, 4 et 5, et qui se **caractérise par le fait que** le dispositif compensateur (5) a une première plaque de raccordement (40) sur laquelle vient se fixer un guide linéaire, à savoir le premier ou deuxième guide linéaire, et l'autre, à savoir le deuxième ou premier guide linéaire sur lequel il vient se fixer, si ce n'est que l'autre guide linéaire vient se fixer sur l'un ou l'autre des composants suivants : le convoyeur télescopique (2) ou le dispositif de chargement ou déchargement (6), alors que la première plaque de raccordement (40) vient se fixer, de manière permanente ou par un moyen détachable, par le biais du dispositif à raccord rapide (4), sur l'autre composant, à savoir le dispositif de chargement ou déchargement (6) ou le convoyeur télescopique (2).

7. Le dispositif que décrit la revendication 6, qui se **caractérise par le fait que** le dispositif à raccord rapide (4) vient s'insérer entre la première plaque de raccordement (40) et une deuxième plaque de raccordement (60), et cette deuxième plaque de raccordement (60) vient se fixer, de manière permanente, à l'autre composant.

8. Le dispositif que décrit l'une ou l'autre des revendications 4 à 6, qui se **caractérise par le fait que** le premier guide linéaire (52, 48) vient se raccorder au deuxième guide linéaire (42, 44) par le biais d'un joint de raccordement qui peut tourner autour de l'axe pivot (30) et l'axe de rotation (58) qui se situe à sa perpendiculaire.

9. Le dispositif que décrit la revendication 8, qui se **caractérise par le fait que** sont implantés sur le dispositif de déchargement ou déchargement (6) ou sur le convoyeur télescopique (2) deux éléments parallèles de guidage linéaire (42) qui sont espacés, sur lesquels, dans chaque cas, vient se fixer un premier composant de guidage (44), alors qu'un deuxième composant de guidage (48) vient se fixer sur chaque premier composant de guidage (44), dans chaque cas par le biais d'un joint pivotant (46) qui peut tourner autour de l'axe de rotation (58) et, au niveau des deuxièmes composants de guidage (48) un élément supplémentaire de guidage linéaire (52) vient se fixer et peut tourner autour de l'axe pivot (30).

10. Le dispositif que décrit la revendication 9, qui se **caractérise par le fait que** l'élément supplémentaire de guidage linéaire (52) peut se raccorder au dispositif de chargement ou déchargement (6) ou au convoyeur télescopique (2) par le biais de la plaque de raccordement (40) et du dispositif à raccord rapide (4).
